(19) Europäisches Patentamt / European Patent Office / Office européen des brevets

(11) **EP 4 286 540 B1**

(12) **EUROPEAN PATENT SPECIFICATION**

(45) Date of publication and mention
of the grant of the patent:
**08.10.2025 Bulletin 2025/41**

(21) Application number: **21931694.0**

(22) Date of filing: **04.11.2021**

(51) International Patent Classification (IPC):
*C21C 5/28* (2006.01)      *C21C 5/46* (2006.01)
*C21C 1/02* (2006.01)      *C21C 5/52* (2006.01)
*C21C 5/32* (2006.01)      *F27B 3/28* (2006.01)

(52) Cooperative Patent Classification (CPC):
**C21C 1/02; C21C 5/32; C21C 5/4673; F27B 3/28;**
C21C 2005/5288; C21C 2300/06; C21C 2300/08;
Y02P 10/20

(86) International application number:
**PCT/JP2021/040541**

(87) International publication number:
**WO 2022/195951 (22.09.2022 Gazette 2022/38)**

(54) **METHOD FOR OPERATING CONVERTER AND METHOD FOR PRODUCING MOLTEN STEEL**

VERFAHREN ZUM BETRIEB UND VERFAHREN ZUR HERSTELLUNG VON GESCHMOLZENEM STAHL

PROCÉDÉ DE MISE EN OEUVRE ET PROCÉDÉ DE FABRICATION D'ACIER EN FUSION

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: **17.03.2021 JP 2021043731**

(43) Date of publication of application:
**06.12.2023 Bulletin 2023/49**

(73) Proprietor: **JFE Steel Corporation**
**Tokyo 100-0011 (JP)**

(72) Inventors:
• **AMANO, Shota**
**Tokyo 100-0011 (JP)**
• **KONO, Yuki**
**Tokyo 100-0011 (JP)**

(74) Representative: **Haseltine Lake Kempner LLP**
**Bürkleinstrasse 10**
**80538 München (DE)**

(56) References cited:
WO-A1-2019/117200      WO-A1-2020/129887
JP-A- 2017 193 784      JP-A- 2018 044 220
JP-A- 2021 031 688      TW-B- I 685 569
US-A1- 2015 000 470

• **NAITO KEN-ICHIRO, ASAHARA NORIFUMI, WAKOH MASAMITSU, MATSUMIYA TOORU: "Fundamental Study on Effects of Various Factors on Fluid Behavior during Intermediate Deslagging of MURC (Multi-Refining Converter) Process", TETSU TO HAGANE: JOURNAL OF THE IRON AND STEEL INSTITUTE OF JAPAN, IRON AND STEEL INSTITUTE OF JAPAN. TOKYO., JP, vol. 100, no. 4, 1 January 2014 (2014-01-01), JP**
**, pages 522 - 529, XP055967633, ISSN: 0021-1575, DOI: 10.2355/tetsutohagane.100.522**

**Description**

Technical Field

The present invention relates to a method for operating a converter that produces molten steel by supplying an oxygen source to molten pig iron inside a converter-type refining furnace, and relates to a method for operating a converter and a method for producing molten steel that reduce the consumption amount of auxiliary raw material, such as lime.

Background Art

In recent years, development of molten pig iron preliminary processing methods (desiliconization processing, dephosphorization processing, and desulfurization processing) has advanced, and the concentrations of phosphorus and sulfur in molten pig iron charged into converters have been reduced to levels where there is no need for further removal. Thus, an iron and steel refining process in which only decarburization refining is mainly performed in a converter is near completion. Desiliconization processing and dephosphorization processing are reactions in which silicon or phosphorus in molten pig iron is removed through oxidation by oxygen in an oxygen source (an oxygen gas or iron oxide) supplied to the molten pig iron, and desulfurization processing is a reaction in which sulfur in molten pig iron reacts with a desulfurizing material, such as CaO, and the sulfur is removed into slag.

In particular, as the dephosphorization reaction of Formula (A) below shows, dephosphorization processing is performed by fixing phosphorus oxide ($P_2O_5$), which is generated as phosphorus in molten pig iron is oxidized by oxygen in an oxygen source (FeO), by a CaO-containing substance that is added as a dephosphorization refining agent.

$$2[P] + 5(FeO) + 3(CaO) = (3CaO \cdot P_2O_5) + 5[Fe] \qquad (A)$$

In Formula (A), [P] and [Fe] represent components in molten pig iron, and (FeO), (CaO), and ($3CaO \cdot P_2O_5$) represent components in slag. This is a reaction in which phosphorus in the molten pig iron is oxidized by FeO in the slag, and $P_2O_5$ generated by this oxidation reaction reacts with CaO and is absorbed by slag that is formed as the CaO-containing substance turns into slag.

Thus, from the viewpoint of equilibrium in the dephosphorization reaction, in the dephosphorization processing, slag basicity (= (mass% CaO) / (mass% SiO$_2$)) is required to be a predetermined value or higher so as to make the slag absorb the generated phosphorus oxide ($P_2O_5$). Generally, it is necessary to control the slag basicity within a range of 1.5 to 3.0 in order to promote the dephosphorization reaction.

Molten pig iron tapped from a blast furnace contains silicon at a ratio of about 0.2 to 0.4 mass%. When an oxygen source is supplied to molten pig iron, thermodynamically, silicon in the molten pig iron is preferentially oxidized before phosphorus in the molten pig iron, so that when the concentration of silicon in the molten pig iron before dephosphorization processing is higher, a larger amount of SiO$_2$ is generated in the dephosphorization processing. In this case, not only is a larger amount of CaO-containing substance used to keep the slag basicity at a predetermined value, but also a larger amount of slag is generated and the production cost increases.

In this connection, a method has been proposed (e.g., see Patent Literature 1) that, when performing desiliconization processing using a converter on molten pig iron that has not undergone desiliconization processing and performing dephosphorization processing subsequent to the desiliconization processing, temporarily stops refining after the desiliconization processing and removes, from the converter, slag that has been generated in the desiliconization processing and is mainly composed of SiO$_2$ (hereinafter referred to as "intermediate slag removal"). This method is described as having the advantages of reducing the amount of slag inside the furnace and cutting down on the CaO-containing substance used in dephosphorization processing to keep the slag basicity.

Meanwhile, Patent Literature 2 discloses a method that performs intermediate slag removal in a state where the concentration of Si in molten pig iron exceeds 0.2 mass%, feeds slag generated in a step later than the dephosphorization processing into a furnace in which desiliconization processing is performed, and performs desiliconization processing with the slag basicity adjusted to be within a range of 0.5 to 1.8. Thus, the CaO source is cut down while the yield of molten steel is increased.

Patent Literature 3 proposes a method that measures the amount of slag to be subjected to intermediate slag removal by a weighing device to thereby add an appropriate amount of CaO-containing substance in the next step. Patent Literature US 2015/000470 A1, JP 2017 193784 A and TW I 685 569 B further disclose a method for operating a converter.

Citation List

Patent Literature

Patent Literature 1: JP-H10-152714A
Patent Literature 2: JP-2011-137196A
Patent Literature 3: JP-2010-126790A

Non Patent Literature

Non Patent Literature 1: Slag Atlas 2nd edition: Verlag Stahleisen GmbH, (1995)

Summary of Invention

Technical Problem

However, the above-described existing methods have the following problems.
As mentioned above, controlling the slag basicity to a predetermined value is effective for efficiently performing dephosphorization processing. Therefore, in the case where desiliconization processing, intermediate slag removal, and dephosphorization processing are continuously performed in one converter as in the methods disclosed in Patent Literatures 1 and 2, keeping the slag basicity at a predetermined value in the dephosphorization processing while reducing the CaO-containing substance to be used in the dephosphorization processing requires controlling the concentration of silicon in the molten pig iron upon completion of the desiliconization processing within a certain range, and further estimating the amount of slag removed to the outside of the system in the intermediate slag removal. Patent Literatures 1 and 2, however, do not clarify the amount of removed slag.
The method disclosed in Patent Literature 3 is prone to troubles, such as scattering of melted materials onto a carriage, and requires considerable maintenance to obtain an accurate weighed value. Moreover, given that a suppressant is sometimes added to the slag ladle to quickly stabilize the slag after slag removal, an accurate value cannot always be measured.
Having been contrived in view of these circumstances, the present invention aims to provide a method for operating a converter and a method for producing molten steel that produce molten steel by refining molten pig iron using a converter-type refining furnace and that can reduce the consumption amount of auxiliary raw material used in a refining step by accurately estimating the amount and physical properties of removed slag. In particular, the present invention aims to provide a method for operating a converter and a method for producing molten steel that, in molten pig iron refining processing in which one refining step, an intermediate slag removal step, and another refining step are sequentially performed, easily and accurately estimate the amount and physical properties of slag removed in the intermediate slag removal step, and can thereby reduce the consumption amount of auxiliary raw material used in the other subsequent refining step.

Solution to Problem

As a result of vigorously conducting many studies in view of the above problems, the present inventor found that the amount and physical properties of removed slag could be estimated from the shape and velocity of a slag removal flow, and the slag surface shape inside a converter-type refining furnace during the slag removal. This insight formed the basis for completing the present invention.
A method for operating a converter according to the present invention that advantageously solves the above-described problems is defined in claim 1. Preferred features are defined in the dependent claims.

Advantageous Effects of Invention

According to the present invention, the method for operating a converter that produces molten steel by supplying an oxygen source to molten pig iron inside a converter-type refining furnace and refining the molten pig iron can accurately estimate an amount and physical properties of removed slag and thereby reduce the consumption amount of auxiliary raw material used in the refining step. In particular, in a molten pig iron refining processing in which one refining step, an intermediate slag removal step, and another refining step are sequentially performed, the amount and physical properties of the slag to be removed in the intermediate slag removal step can be easily and accurately estimated, and thereby the consumption amount of auxiliary raw material used in the other subsequent refining step can be reduced. Moreover, when produced using this method for operating a converter, molten steel can be efficiently produced with the consumption amount of auxiliary raw material reduced.

Brief Description of Drawings

FIG. 1 is schematic view showing an overview of the configuration of a facility having a converter-type refining furnace that is suitable for implementing the present invention.

FIG. 2 is a sectional schematic view showing a state where slag is removed by tilting the converter-type refining furnace.

FIG. 3 is an enlarged schematic sectional view of part A of FIG. 2.

FIG. 4 is a graph showing a relationship between a slag surface $h_0$ and a slag thickness $h_e$ at a throat position in a water model experiment.

FIG. 5 is a graph showing a relationship between an estimated value and a measured value of a surface flow velocity $v_e$ at a throat position in a water model experiment.

FIG. 6 is a graph showing a relationship between an estimated value and a measured value of a mass-based slag removal speed $\Delta W / \Delta t$ in a water model experiment.

FIG. 7 is a graph showing an influence of kinetic viscosity $v$ on a relationship between a slag surface $h_0$ and a horizontal distance L reached by a slag removal flow in a water model experiment.

FIG. 8 is a graph showing an influence of kinetic viscosity $v$ on the relationship between a slag surface $h_0$ and a slag thickness $h_e$ at a throat position in a water model experiment.

FIG. 9 is a graph showing an influence of kinetic viscosity $v$ on a relationship between a slag surface $h_0$ and a volume-based slag removal speed Q in a water model experiment.

FIG. 10 is a graph of estimation lines showing an influence of kinetic viscosity $v$ on the relationship between a throat-based slag surface height $h_0$ and a horizontal distance L reached by a slag removal flow.

Description of Embodiments

Embodiments of the present invention will be specifically described below. The drawings are schematic and may differ from the reality. The following embodiments exemplify a device and a method for embodying the technical idea of the present invention, and are not intended to limit the configuration to the one described below. Thus, various changes can be made to the technical idea of the present invention within the technical scope described in the claims.

<Experiment 1>

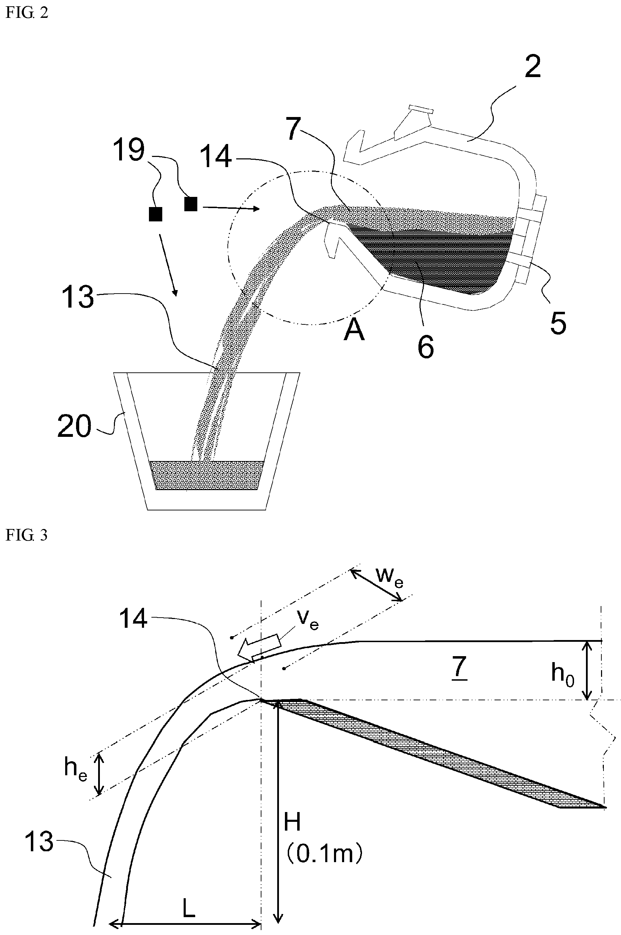

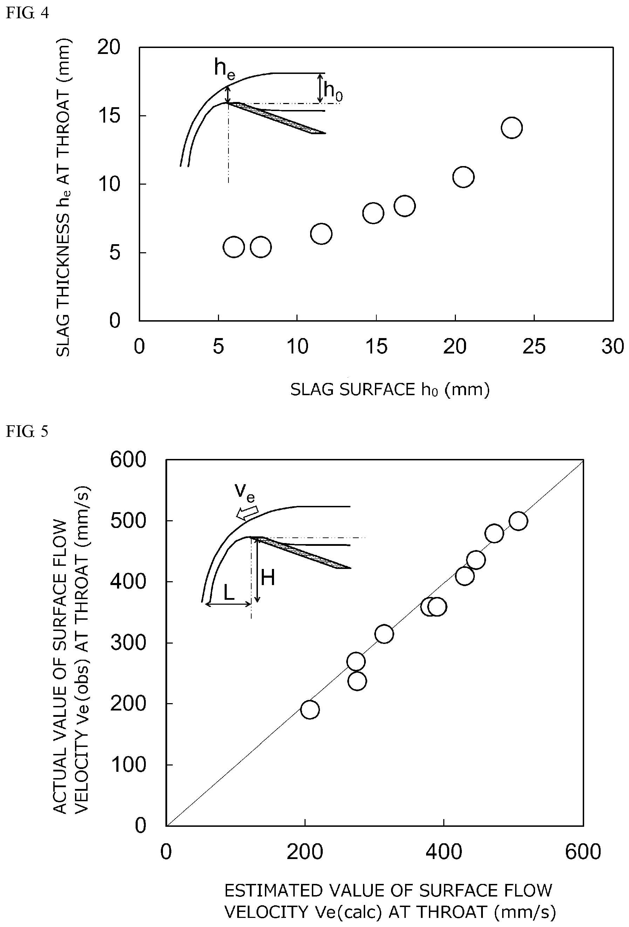

Before experimenting with actual equipment, the present inventor conducted a water model experiment using equipment about one-tenth the size of the actual equipment, in which slag was simulated by water and, while water was continuously removed, the items shown in FIG. 3 were measured for examination. FIG. 4 shows a relationship between a throat-based slag surface height $h_0$ and a slag thickness $h_e$ at the throat position in the water model experiment. Here, as shown in the enlarged schematic view of FIG. 3, the throat-based slag surface height $h_0$ refers to a height of a substantially horizontal liquid surface at a position a certain distance away from a throat 14 inside a converter-type refining furnace 2 based on the lowest position of the throat 14 at which a slag removal flow 13 starts to fall. Similarly, FIG. 5 shows, regarding a surface flow velocity $v_e$ (m/s), a relationship between a flow velocity $v_e$ (calc) of a slag removal flow obtained from a horizontal distance L reached by the slag removal flow 13 and a surface flow velocity $v_e$ (obs) obtained from a moving image of a water surface by image analysis. Here, $v_e$ (calc) is a value estimated by Formula (3) below. In Formula (3), H is a slag removal flow falling distance (m); L is a horizontal distance (m) reached by the slag removal flow at the slag removal flow falling distance H; and g is gravitational acceleration ($9.8 \text{ m/s}^2$). In this experiment, 0.1 m was used as the slag removal flow falling distance H.

[Expression 4]

$$v_e = L \times \sqrt{\frac{g}{2H}} \qquad (3)$$

As is clear from FIG. 5, the surface flow velocity $v_e$ (calc) estimated from the horizontal distance L reached by the slag removal flow (water) 13 and the measured surface flow velocity $v_e$ (obs) match well. Thus, the surface flow velocity $v_e$ at the throat position can be estimated by measuring the horizontal distance L reached by the slag removal flow at a certain

EP 4 286 540 B1

slag removal flow falling distance H.

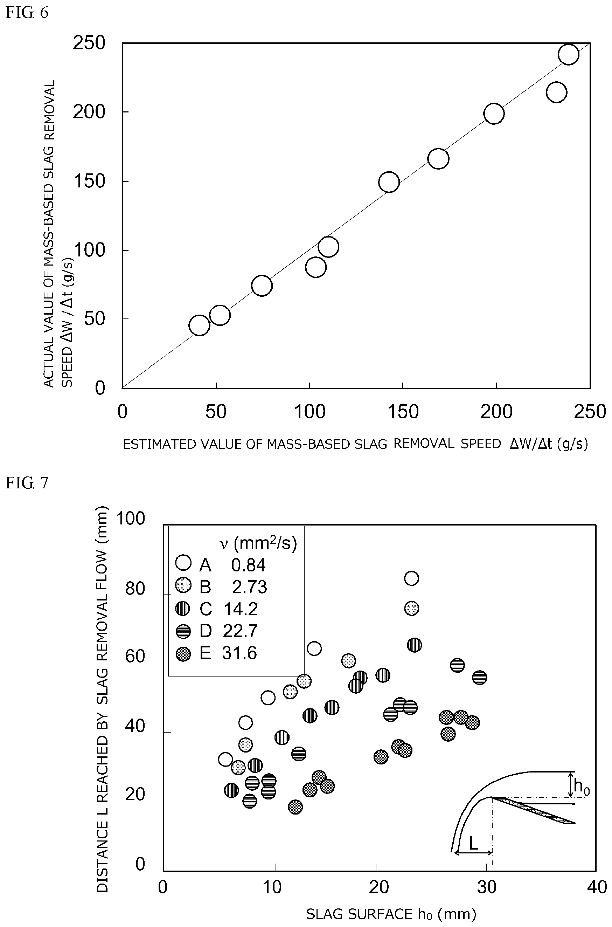

Further, in the same experiment, a moving image was taken from the front side of the throat, and a surface width $w_e$ of the slag removal flow (water) at the throat position was measured. A mass-based slag removal speed $\Delta W / \Delta t$ (g/s) was estimated using Formula (2) shown below, and was compared with an actual value obtained from a change in weight of a slag ladle 20. The result is shown in FIG. 6. Here, in Formula (2), w (h) is a width (m) of the slag removal flow 13 in a horizontal direction at the height h of the position of the throat 14; $\rho$ is liquid density (t/m$^3$); v (h) is a flow velocity (m/s) of the slag removal flow at the height h of the position of the throat 14; $v_e$ is surface flow velocity (m/s) of the slag removal flow at the throat; $h_e$ is a slag thickness (m) at the throat position; and a and b are constants. The surface width $w_e$ of the slag removal flow (water) at the throat position can also be calculated from a profile of the throat 14 obtained in advance, a tilt angle of the converter-type refining furnace 2, and a slag thickness $h_e$ at the position of the throat 14.

[Expression 5]

$$\Delta W / \Delta t = \int_0^h \rho w(h) v(h) \cdot dh + b = a w_e v_e h_e + b \quad (2)$$

From the result of FIG. 6, it can be seen that the mass-based slag removal speed $\Delta W / \Delta t$ estimated based on the measurement of the slag removal flow shape matches the actual value well. The slag removal speed $\Delta W / \Delta t$ can be estimated by measuring the slag removal flow shape. Further, it was revealed that the slag removal amount over the series of the slag removal steps can be estimated by integrating the slag removal speed using the slag removal time as a domain of integration.

<Experiment 2>

The present inventor further conducted a water model experiment with the about one-tenth-sized equipment used in Experiment 1, in which slag was simulated using water varying in physical properties, particularly in kinetic viscosity, a solution of ethanol and water , and a plurality of liquid paraffins, and the items shown in FIG. 3 were measured for examination as in Experiment 1. In FIGs. 7 to 9, A represents water; B represents a 30% solution of ethanol and water; and C to E each represent a liquid paraffin having a different kinetic viscosity v. The kinetic viscosities at 28°C of water A, 30% solution of ethanol and water B, and liquid paraffins C, D, and E were 0.84 mm$^2$/s, 2.73 mm$^2$/s, 14.2 mm$^2$/s, 22.7 mm$^2$/s, and 31.6 mm$^2$/s, respectively.

FIG. 7 shows an influence of the kinetic viscosity v of a liquid on a relationship between the slag surface height $h_0$ with respect to the throat 14 and the horizontal distance L reached by the slag removal flow 13 in the water model experiment. The horizontal distance L reached by the slag removal flow 13 was measured with the falling distance H being 0.1 m. From the result of FIG. 7, it is clear that when the kinetic viscosity v of the slag (liquid) to be removed changes, the relationship of the horizontal distance L reached by the slag removal flow 13 with the slag surface height $h_0$ with respect to the throat 14 changes.

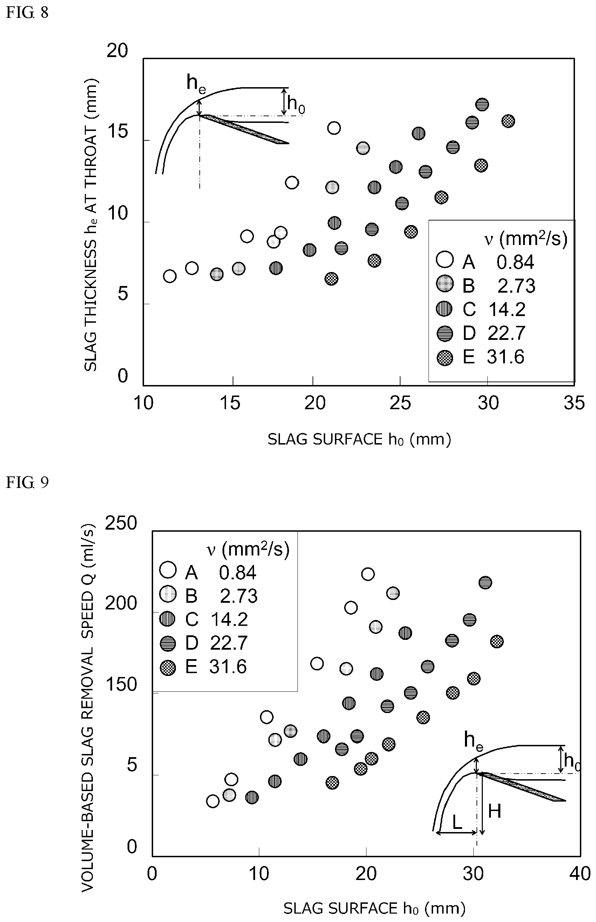

FIG. 8 shows an influence of the kinetic viscosity v of a liquid on a relationship between the throat-based slag surface height $h_0$ and the slag thickness $h_e$ at the throat position in the water model experiment. From the result of FIG. 8, it is clear that when the kinetic viscosity of the slag (liquid) to be removed changes, the relationship between the slag thickness $h_e$ at the throat position and the throat-based slag surface height $h_0$ changes.

FIG. 9 shows an influence of the kinetic viscosity v of a liquid on a relationship between the throat-based slag surface height $h_0$ and a volume-based slag removal speed Q in the water model experiment. As is clear from the result of FIG. 9, when the kinetic viscosity v of the slag (liquid) to be removed changes, the relationship of the volume-based slag removal speed Q with the throat-based slag surface height $h_0$ changes.

As seen from the results of FIGs. 7 to 9, it is possible to estimate the kinetic viscosity v of slag and the slag removal speed as long as any two among the throat-based slag surface height $h_0$, the slag thickness $h_e$ at the throat position, and the horizontal distance L reached by the slag removal flow can be measured. A relationship between slag viscosity $\mu$ (= $\rho \cdot$ v) and slag basicity (CaO / SiO$_2$) is conventionally well known, and slag basicity can be estimated from estimated viscosity and temperature of slag. For example, the amount of CaO in slag can be estimated from estimated slag basicity by calculating the amount of SiO$_2$ in the slag from the Si balance in desiliconization processing.

<Actual Facility>

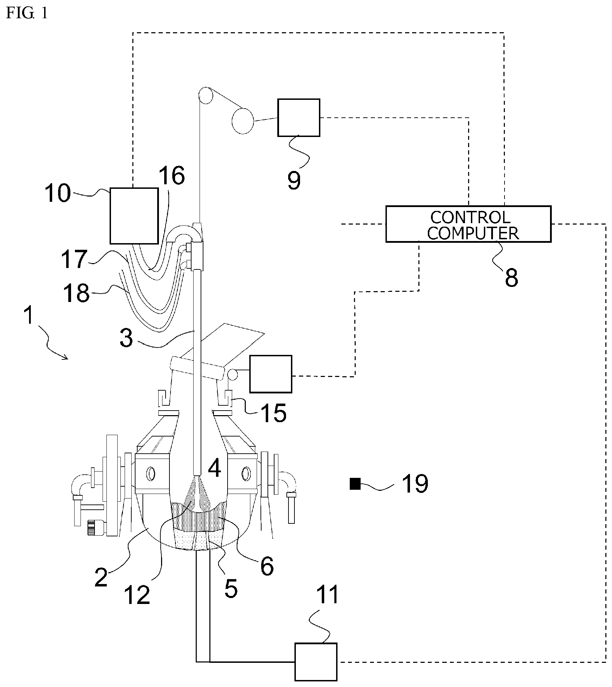

First, the configuration of a converter facility suitable for implementing the present invention will be described based on FIGs. 1 and 2.

A facility 1 having a converter-type refining furnace suitable for implementing the present invention comprises: the converter-type refining furnace 2, a top-blowing lance 3, a control computer 8, a top-blowing lance height control device

5

9 that adjusts the height of the top-blowing lance 3, a top-blowing lance oxidizing gas flow rate control device 10 that adjusts the flow rate of an oxidizing gas jetted from the top-blowing lance 3, and a bottom-blown gas flow rate control device 11 that adjusts the flow rate of a agitation gas blown in through a bottom-blowing tuyere 5, with the latter three being configured to be able to operate separately by control signals transmitted from the control computer 8.

The control computer 8 is configured to transmit control signals that cause the lance height control device 9 that adjusts the height of the top-blowing lance 3, the oxidizing gas flow rate control device 10 that adjusts the flow rate of an oxidizing gas jetted from the top-blowing lance 3, and the bottom-blown gas flow rate control device 11 that adjusts the flow rate of a stirring gas blown in through the bottom-blowing tuyere 5 to operate separately or simultaneously.

Using the above-described facility 1 having the converter-type refining furnace, the method for operating a converter in this embodiment performs desiliconization refining, dephosphorization refining, and decarburization refining of molten pig iron 6 inside the converter-type refining furnace 2 by jetting an oxidizing gas onto the molten pig iron 6 through the top-blowing lance 3, and optionally further blowing in an oxidizing gas or an inert gas through the bottom-blowing tuyere 5. The molten pig iron 6 is molten pig iron containing Si at a ratio of 0.02 mass% or higher. The top-blowing lance 3 has a lance tip 4 at a leading end, and during refining, jets an oxidizing gas jet flow 12 toward the surface of the molten pig iron 6.

For example, after one refining step of performing desiliconization refining, the method proceeds to an intermediate slag removal step, in which the converter-type refining furnace 2 is tilted to remove slag 7 without discharging the molten metal 6 to the outside of the furnace (hereinafter referred to as slag removal) (FIG. 2). Here, a plurality of measurement cameras 19 for imagining the vicinity of the throat 14 of the converter-type refining furnace 2 while the slag is removed with the converter-type refining furnace 2 tilted is provided so as to be able to image the front side and the lateral sides of the throat 14 as well as a position at which the slag removal flow 13 falls.

In the slag removal step, the surface of the slag 7 at the throat 14 is detected at a timing when the tilt angle of the converter-type refining furnace 2 remains constant for a predetermined time or longer, and the slag thickness $h_e$ at the throat position is estimated based on the tilt angle of the furnace body at that point and a profile of the throat 14 at the same tilt angle that has been imaged in advance. The time for which the tilt angle should remain constant can be selected from a range of 1 to 60 s, and is preferably within a range of 5 to 20 s. Alternatively, the slag thickness $h_e$ may be estimated from the throat-based slag surface height $h_0$ inside the converter-type refining furnace 2. Further, the horizontal distance L reached by the slag removal flow 13 at the falling height H of the slag removal flow 13 is measured, and the slag surface flow velocity $v_e$ at the throat position is estimated using Formula (3) above. While depending on the configuration of the facility, the falling height H to be used can be about 5 to 15 m. When the high-temperature slag 7 is cooled on contact with atmospheric air, unevenness in temperature (e.g., a change in brightness or color) occurs in the surface. It is also possible to measure the surface velocity of the slag removal flow 13 by observing the movement of this temperature unevenness with a camera.

From the slag thickness $h_e$ (m) at the throat position, and the slag removal flow surface width $w_e$ (m) and slag surface flow velocity $v_e$ (m/s) at the throat position that have been measured or estimated, a mass-based slag removal amount W (t) is calculated by Formula (1) below and Formula (2) above. Here, constants a and b are determined in advance such that the difference between an estimated value of the slag removal amount W and an actual value thereof measured by a load cell etc. is minimized. In Formula (1), t is a processing time (s) of the slag removal step.
[Expression 6]

$$W = \int_0^t \Delta W / \Delta t \cdot dt \qquad (1)$$

From the mass-based slag removal amount W estimated by the above method and the total amount of slag obtained from the material balance, the amount of slag remaining inside the converter-type refining furnace 2 is estimated. Then, the amount of auxiliary raw material to be fed during another refining step, for example, dephosphorization refining is determined, and dephosphorization refining is performed. In this way, dephosphorization refining can be efficiently performed without excessive CaO source being fed.

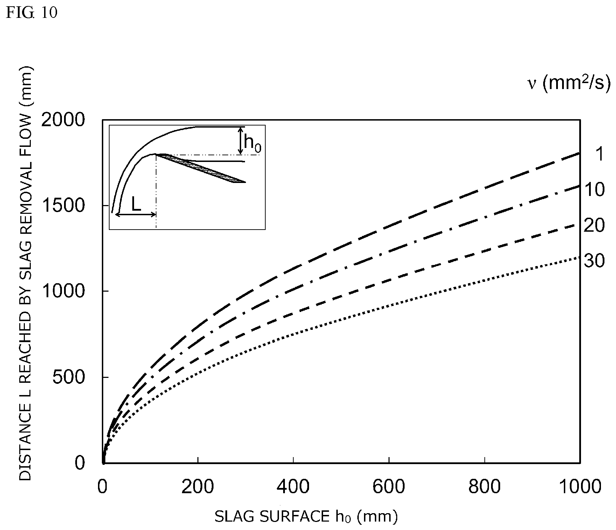

Further, from the horizontal distance L reached by the slag removal flow 13 at the falling distance H of the slag removal flow 13 and the throat-based slag surface height $h_0$ inside the converter-type refining furnace 2, the kinetic viscosity v of the slag is estimated based on an approximation curve (e.g., the graph of FIG. 10) that has been created in advance. Using a slag temperature that has been separately measured or estimated after completion of desiliconization refining, the slag basicity, the slag composition, and particularly the concentration of CaO in the slag that correspond to the estimated kinetic viscosity of the slag are estimated. Here, the approximation curves shown in FIG. 10 were approximated by Formula (4) below. In Formula (4), $\alpha$ and $\beta$ are constants dependent on the kinetic viscosity v of the slag. As long as the kinetic viscosity v can be specified, a relationship between any two or more among the following can be used after adjustment: the horizontal distance reached by the slag removal flow at a certain distance down from the throat, the throat-based slag surface height inside the converter-type refining furnace, the slag surface flow velocity at the throat position, and the slag thickness at the throat position. For example, the influence of the kinetic viscosity v of the slag on the relationship between the throat-based slag surface height $h_0$ inside the converter-type refining furnace and the slag thickness $h_e$ at the throat position may be obtained.

[Expression 7]

$$L = \alpha\sqrt{(h_0 - \beta)} \qquad (4)$$

Based on the obtained estimated values of physical values of the slag, particularly the CaO concentration and the amount of slag remaining inside the converter-type refining furnace 2, the amount of auxiliary raw material to be fed during another refining step, for example, dephosphorization refining is determined, and dephosphorization refining is performed. In this way, the CaO source can be cut down more accurately.

While the above example has been described with top- and bottom-blowing refining taken as an example, the present invention is of course also applicable to refining with only top blowing and refining with oxygen bottom-blown. The slag removal step is applicable not only to a slag removal step after desiliconization refining, but also to a slag removal step in the middle of desiliconization refining, after dephosphorization refining and before decarburization refining, and after decarburization refining. For example, calculation for blowing during decarburization refining can be accurately performed by accurately grasping the amount of slag remaining after dephosphorization refining. Also in the case where slag remaining after decarburization refining is used as pre-deposited slag for desiliconization refining and dephosphorization refining of the next charge, this method can contribute to cutting down the amount of solidifying material etc. to be fed.

As another embodiment of the present invention, a method for producing molten steel is a method that, using the method for operating a converter according to the above-described embodiment, supplies an oxygen source to molten pig iron inside a converter-type refining furnace, performs molten pig iron desiliconization refining, molten pig iron dephosphorization refining, and decarburization refining, and performs a slag removal treatment or an intermediate slag removal treatment. By estimating the amount, properties, and composition of slag during the slag removal treatment or the intermediate slag treatment, this method can increase the accuracy of each type of refining as well as contribute to cutting down on the auxiliary raw material, thus enabling efficient production of molten steel.

(Example 1)

As process No. 1, using a 300-ton-capacity top- and bottom-blowing converter (with an oxygen gas top-blown and an argon gas bottom-blown) of the same form as the converter-type refining furnace 2 shown in FIGs. 1 and 2, desiliconization refining, dephosphorization refining, and decarburization refining of the molten pig iron 6 were performed. First, iron scrap was charged into the converter-type refining furnace 2, and then 300 tons of molten pig iron at a temperature of 1200 to 1280°C were charged into the converter.

Next, while an argon gas for agitation was blown into the molten pig iron through the bottom-blowing tuyere 5, an oxygen gas was jetted toward the bath surface of the molten pig iron through the top-blowing lance 3 to start molten pig iron desiliconization refining. The amount of iron scrap charged was adjusted such that the molten pig iron had a temperature of 1360°C upon completion of dephosphorization refining.

During desiliconization refining, the slag basicity was kept within a range of 0.8 to 1.0, and intermediate slag removal was performed at the point when about five minutes passed. Thereafter, dephosphorization refining was continuously performed with the slag basicity controlled within a range of 1.0 to 1.5.

During the intermediate slag removal step, the slag thickness $h_e$ at the throat position and the horizontal distance L reached by the slag removal flow at the falling height H were measured at one-second intervals. The falling height H was about 10 m. For $h_e$ and L, moving averages over the past five seconds were obtained and used as actual values at that time of day. Further, the mass-based slag removal amount W was estimated by using Formulae (1) to (3) above. Constants a and b on the right side of Formula (2) were determined using actually weighed values of the intermediate slag removal amount W in the past ten charges such that the difference between the estimated value and the actual value was minimized.

A (mass-based) amount of slag to be carried over to the next step, dephosphorization blowing was estimated by reducing the obtained mass-based slag removal amount W from the (mass-based) slag amount before the intermediate slag removal. The (mass-based) slag amount before the intermediate slag removal was determined by adding up a total of auxiliary raw materials fed in the desiliconization refining step, an $SiO_2$ generation amount estimated from Si in the molten pig iron, and an FeO generation amount estimated from a value obtained by exhaust gas analysis.

(Example 2)

As process No. 2, using the same facility as in Example 1, desiliconization refining, intermediate slag removal, dephosphorization refining, and decarburization refining were performed under the same conditions.

During the intermediate slag removal step, the slag thickness $h_e$ at the throat position and the horizontal distance L reached by the slag removal flow at the falling height H were measured at one-second intervals. The falling height H was about 10 m. For $h_e$ and L, moving averages over the past five seconds were obtained and used as actual values at that time of day. Further, the mass-based slag removal amount W was estimated by using Formulae (1) to (3) above. Constants a and b on the right side of Formula (2) were determined using actually weighed values of the intermediate slag removal amount W in the past ten charges such that the difference between the estimated value and the actual value was minimized.

In this example, intermediate slag removal was performed with the tilt angle of the converter-type refining furnace adjusted, while the obtained mass-based slag removal amount W was monitored in real time. A (mass-based) amount of slag to be carried over to dephosphorization refining was estimated by reducing the mass-based slag removal amount W from the (mass-based) slag amount before the intermediate slag removal, and an amount of CaO to be fed in the dephosphorization refining step was determined. The (mass-based) slag amount before the intermediate slag removal was determined by adding up a total of auxiliary raw materials fed in the desiliconization refining step, an $SiO_2$ generation amount estimated from Si in the molten pig iron, and an FeO generation amount estimated from a value obtained by exhaust gas analysis.

(Example 3)

As process No. 3, using the same facility as in Example 1,
desiliconization refining, intermediate slag removal, dephosphorization refining, and decarburization refining were performed under the same conditions.

During the intermediate slag removal step, the slag thickness $h_e$ at the throat position and the horizontal distance L reached by the slag removal flow at the falling height H were measured at one-second intervals. As the falling height H, about 10 m was used. For $h_e$ and L, moving averages over the past five seconds were obtained and used as actual values at that time of day. Further, using Formulae (1) to (3) above, the mass-based slag removal amount W was estimated. Constants a and b on the right side of Formula (2) were determined using actually weighed values of the intermediate slag removal amount W in the past ten charges such that the difference between the estimated value and the actual value was minimized.

In this example, a (mass-based) amount of slag to be carried over to dephosphorization refining was estimated by reducing the obtained mass-based slag removal amount W from the (mass-based) slag amount before the intermediate slag removal. The influence of the kinetic viscosity of the slag on the relationship between the horizontal distance L reached by the slag removal flow at the falling height H and the throat-based slag surface height $h_0$ inside the converter-type refining furnace 2 was approximated in advance as in Formula (4) above. The kinetic viscosity v of the slag was obtained using a known literature, for example, Non Patent Literature 1, based on a value obtained by slag composition analysis and a result of temperature measurement.

From a measurement result of the slag removal flow shape that was measured when the tilt angle remained constant for ten seconds or longer in the current charge, $\alpha$ and $\beta$ in Formula (4) were determined such that the actual value and the estimated value match. The obtained values of $\alpha$ and $\beta$ were compared with a past record of slag removal to estimate the kinetic viscosity of the slag.

From an FeO generation amount estimated from a value obtained by exhaust gas analysis, an $SiO_2$ generation amount estimated from a change in Si concentration of the molten pig iron, an MnO generation amount estimated from a change in Mn concentration of the molten pig iron, amounts of MgO and $Al_2O_3$ estimated from auxiliary raw materials fed during desiliconization refining, and the estimated kinetic viscosity v of the slag, the amount of CaO dissolved was estimated and the slag composition was estimated.

Based on the obtained estimation result of the slag composition and the (mass-based) amount of slag to be carried over to dephosphorization refining estimated above, the amount of CaO to be fed in the dephosphorization refining step was determined. The (mass-based) slag amount before the intermediate slag removal was determined by adding up a total of auxiliary raw materials fed in the desiliconization refining step, an $SiO_2$ generation amount and an MnO generation amount estimated from changes in composition of the molten pig iron, and an FeO generation amount estimated from a value obtained by exhaust gas analysis.

(Example 4)

As process No. 4, using the same facility as in Example 1,
desiliconization refining, intermediate slag removal, dephosphorization refining, and decarburization refining were performed under the same conditions.

During the intermediate slag removal step, the slag thickness $h_e$ at the throat position and the horizontal distance L reached by the slag removal flow at the falling height H were measured at one-second intervals. The falling height H was about 10 m. For $h_e$ and L, moving averages over the past five seconds were obtained and used as actual values at that time of day. Further, using Formulae (1) to (3) above, the mass-based slag removal amount W was estimated. Constants a and b on the right side of Formula (2) were determined using actually weighed values of the intermediate slag removal amount W in the past ten charges such that the difference between the estimated value and the actual value was minimized.

In this example, the intermediate slag removal was performed with the tilt angle of the converter-type refining furnace adjusted while the obtained mass-based slag removal amount W was monitored in real time. A (mass-based) amount of slag to be carried over to dephosphorization refining was estimated by reducing the mass-based slag removal amount W from the (mass-based) slag amount before the intermediate slag removal, and an amount of CaO to be fed in dephosphorization refining was determined. The influence of the kinetic viscosity of the slag on the relationship between the horizontal distance L reached by the slag removal flow at the falling height H and the throat-based slag surface height $h_0$ inside the converter-type refining furnace 2 was approximated in advance as in Formula (4) above. The kinetic viscosity v of the slag was obtained from a known literature based on a value obtained by slag composition analysis and a result of temperature measurement.

From a measurement result of the slag removal flow shape that was measured when the tilt angle remained constant for ten seconds or longer in the current charge, $\alpha$ and $\beta$ in Formula (4) were determined such that the actual value and the estimated value match. The obtained values of $\alpha$ and $\beta$ were compared with a past record of slag removal to estimate the kinetic viscosity of the slag.

From an FeO generation amount estimated from a value obtained by exhaust gas analysis, an $SiO_2$ generation amount estimated from a change in Si concentration of the molten pig iron, an MnO generation amount estimated from a change in Mn concentration of the molten pig iron, amounts of MgO and $Al_2O_3$ estimated from the fed auxiliary raw materials, and the estimated kinetic viscosity v of the slag, the amount of CaO dissolved was estimated and the slag composition was estimated.

Based on the obtained estimation result of the slag composition and the (mass-based) amount of slag to be carried over to dephosphorization refining estimated above, the amount of CaO to be fed in the dephosphorization refining step was determined. The (mass-based) slag amount before the intermediate slag removal was determined by adding up a total of auxiliary raw materials fed in the desiliconization refining step, an $SiO_2$ generation amount and an MnO generation amount estimated from changes in composition of the molten pig iron, and an FeO generation amount estimated from a value obtained by exhaust gas analysis.

(Comparative Example)

As process No. 5, using the same facility as in Example 1, desiliconization refining, intermediate slag removal, dephosphorization refining, and decarburization refining were performed under the same conditions. Under the conditions of this example, operation was performed without the slag removal flow shape being measured during intermediate slag removal. The amount of CaO to be fed during dephosphorization refining was determined based on a past operation record.

(Summary)

Table 1 shows means obtained by processing 30 charges under the operation conditions of each of processes No. 1 to 5, and Table 2 shows the operation results. The mean slag removal ratio is a percentage of the mass-based slag removal amount to the (mass-based) slag amount before intermediate slag removal. The amount of reduction in lime unit consumption is shown as compared with condition No. 5. The variation in final concentration (mass%) of phosphorus [P] in the molten pig iron in dephosphorization refining is shown as a standard deviation 1 $\sigma$.

[Table 1]

| Processing No. | Means before desiliconization processing | | | | | Means after dephosphorization processing | | | | | Mean processing time [min] | | |
|---|---|---|---|---|---|---|---|---|---|---|---|---|---|
| | Chemical composition [mass%] | | | | Molten pig iron temperature [°C] | Chemical composition [mass%] | | | | Molten pig iron temperature [°C] | Desiliconization | Intermediate slag discharge | Dephosphorization |
| | C | Si | Mn | P | | C | Si | Mn | P | | | | |
| 1 | 4.34 | 0.36 | 0.31 | 0.120 | 1266 | 3.12 | <0.01 | 0.18 | 0.028 | 1358 | 4.9 | 8.3 | 5.5 |
| 2 | 4.29 | 0.39 | 0.27 | 0.116 | 1258 | 3.06 | <0.01 | 0.12 | 0.025 | 1366 | 5.0 | 8.4 | 5.3 |
| 3 | 4.31 | 0.37 | 0.30 | 0.110 | 1263 | 3.04 | <0.01 | 0.15 | 0.025 | 1362 | 4.9 | 8.5 | 5.4 |
| 4 | 4.21 | 0.37 | 0.29 | 0.114 | 1264 | 3.11 | <0.01 | 0.11 | 0.027 | 1368 | 5.0 | 8.4 | 5.3 |
| 5 | 4.31 | 0.38 | 0.28 | 0.118 | 1263 | 2.98 | <0.01 | 0.13 | 0.030 | 1364 | 4.7 | 8.4 | 5.6 |

[Table 2]

| Processing No. | Mean slag removal ratio [%] | Amount of reduction in lime unit consumption [kg/t] | Variation in final [P] concentration 1$\sigma$ [mass%] | Remarks |
|---|---|---|---|---|
| 1 | 54 | 0.5 | 0.002 | Invention Example |
| 2 | 61 | 1.1 | 0.002 | Invention Example |
| 3 | 59 | 1.3 | 0.002 | Invention Example |
| 4 | 59 | 1.2 | 0.002 | Invention Example |
| 5 | 54 | - | 0.004 | Comparative Example |

In each example of the present invention, as the intermediate slag removal ratio was accurately estimated each time, an appropriate amount of lime was fed in dephosphorization refining, so that, compared with the comparative example, the lime consumption was reduced and the variation in final [P] became smaller. In conditions No. 2 and 4, tilting the converter-type refining furnace while monitoring the intermediate slag removal amount in real time led to a higher slag removal ratio than ever before. The examples of the present invention and the comparative example were almost equal in total refining time.

Industrial Applicability

By measuring the slag removal flow shape, the slag removal flow velocity, and the slag surface shape during slag removal, the present invention can estimate the slag removal amount and the slag composition and thereby reduce the amount of auxiliary raw material added in the next step. Regardless of the form of the refining furnace, the present invention is suitably applied to processes that require grasping the amount of slag remaining after slag removal and the physical properties of the slag.

Reference Signs List

1      Facility having converter-type refining furnace
2      Converter-type refining furnace
3      Top-blowing lance
4      Lance tip
5      Bottom-blowing tuyere
6      Molten pig iron
7      Slag
8      Control computer
9      Top-blowing lance height control device
10     Top-blowing lance oxidizing gas flow rate control device
11     Bottom-blown gas flow rate control device
12     Oxidizing gas jet flow
13     Slag removal flow
14     Throat of converter-type vessel
15     Movable hood
16     Top-blowing lance oxidizing gas supply pipe
17     Top-blowing lance cooling water supply pipe
18     Top-blowing lance cooling water discharge pipe
19     Measurement camera
20     Slag ladle

**Claims**

1. A method for operating a converter that, when supplying a gaseous oxygen source to molten pig iron (6) inside a converter-type refining furnace (2) through a top-blowing lance (3) and optionally further blowing in an oxidizing gas or an inert gas through a bottom-blowing tuyere (5) to perform desiliconization refining of the molten pig iron (6) and dephosphorization refining and decarburization refining of the molten pig iron, selects one of the following combinations of refining steps:

a combination of one refining step of performing part of desiliconization refining of the molten pig iron (6), and another refining step of performing dephosphorization refining of the molten pig iron (6) after the desiliconization refining alone or in combination with decarburization refining; and

another combination of one refining step of performing one or both of desiliconization refining and dephosphorization refining of the molten pig iron (6), and another refining step of performing one or both of dephosphorization refining and decarburization refining of the molten pig iron (6),

and performs, between the one refining step and the other refining step, an intermediate slag removal step of removing slag generated in the one refining step through a throat (14),

**characterized by**,

in the intermediate slag removal step, measuring one or two or more selected from a slag removal flow shape, a slag removal flow velocity, and a slag surface shape to estimate one or both of an amount and physical properties of removed slag; estimating an amount of slag remaining inside the converter-type refining furnace (2), or the amount and composition of slag remaining inside the converter-type refining furnace (2); and determining, based on the estimation result, an amount of auxiliary raw material to be fed in one of the types of refining in the other refining step, wherein

the method removes slag after approximating an influence of kinetic viscosity, v, of the slag on a relationship between a horizontal distance, L, reached by a slag removal flow (13) at a certain distance, H, down from the throat (14) and a throat-based slag surface height, $h_0$, inside the converter-type refining furnace (2), or on a relationship between the throat-based slag surface height, $h_0$, inside the converter-type refining furnace (2) and a slag thickness, $h_e$, at a throat position, by an approximation curve that has been created in advance, and estimates the kinetic viscosity, v, of the slag from a result of measuring the slag removal flow shape and the slag surface shape when removing the slag, wherein the approximation curve is approximated by the mathematical expression:

$$L = \alpha\sqrt{(h_0 - \beta)} \qquad (4)$$

,

where L is the horizontal distance reached by the slag removal flow at the slag removal flow falling distance H; $\alpha$ and $\beta$ are constants dependent on the kinetic viscosity, v, of the slag; and $h_0$ is the throat-based slag surface height.

2. The method for operating a converter according to claim 1, wherein, to measure the slag removal flow shape, the slag removal flow velocity, and the slag surface shape, the method measures one or more of the following: the horizontal distance, L, reached by the slag removal flow (13) at the certain distance, H, down from the throat (14), the throat-based slag surface height, $h_0$, inside the converter-type refining furnace (2), a slag surface flow velocity, $v_e$, at the throat position, and the slag thickness, $h_e$, at the throat position.

3. The method for operating a converter according to claim 1 or 2, wherein the method estimates a mass-based slag removal amount W (t) from the horizontal distance, L, reached by a slag removal flow at the certain distance, H, down from the throat (14) and the slag thickness, $h_e$, at a throat position using the relational expressions of the following mathematical expressions 1 to 3:
[Expression 1]

$$W = \int_0^t \Delta W/\Delta t \cdot dt \qquad (1)$$

[Expression 2]

$$\Delta W/\Delta t = \int_0^h \rho w(h)v(h) \cdot dh + b = aw_e v_e h_e + b \qquad (2)$$

[Expression 3]

$$v_e = L \times \sqrt{\frac{g}{2H}} \qquad\qquad (3)$$

where W is a mass-based slag removal amount; t is a slag removal time; $\Delta W / \Delta t$ is a mass-based slag removal speed; w is a slag removal flow width at a height h; $w_e$ is a slag removal flow surface width at the throat position; $\rho$ is slag density; v is a slag flow velocity at the height h; $v_e$ is a slag surface flow velocity at the throat position; $h_e$ is the slag thickness at the throat position; a and b are constants; H is the slag removal flow falling distance; L is the horizontal distance reached by the slag removal flow at the slag removal flow falling distance H; and g is gravitational acceleration equal to 9.8 m/s$^2$.

4. A method for producing molten steel
**characterized in that**,
using the method for operating converter according to any one of claims 1 to 3, the method supplies an oxygen source to molten pig iron inside a converter-type refining furnace, performs desiliconization refining of molten pig iron, dephosphorization refining and decarburization refining of molten pig iron, and performs a slag removal processing or an intermediate slag removal processing.

**Patentansprüche**

1. Verfahren zum Betreiben eines Konverters, das beim Zuführen einer gasförmigen Sauerstoffquelle zu geschmolzenem Roheisen (6) innerhalb eines Raffinationsofens vom Konvertertyp (2) durch eine von oben einblasende Lanze (3) und wahlweise weiterem Einblasen eines oxidierenden Gases oder eines Inertgases durch eine von unten einblasende Düse (5), um eine Entsilikonisierungsraffination des geschmolzenen Roheisens (6) und eine Entphosphorisierungsraffination und eine Entkohlungsraffination des geschmolzenen Roheisens durchzuführen, eine der folgenden Kombinationen von Raffinationsschritten auswählt:

eine Kombination aus einem Raffinationsschritt, bei dem ein Teil der Entsilikonisierungsraffination des geschmolzenen Roheisens (6) durchgeführt wird, und einem anderen Raffinationsschritt, bei dem eine Entphosphorisierungsraffination des geschmolzenen Roheisens (6) nach der Entsilikonisierungsraffination allein oder in Kombination mit der Entkohlungsraffination durchgeführt wird; und
eine andere Kombination aus einem Raffinationsschritt, bei dem entweder die Entsilikonisierungsraffination und/oder die Dephosphierungsraffination des geschmolzenen Roheisens (6) durchgeführt wird bzw. werden, und einem anderen Raffinationsschritt, bei dem entweder eine Entphosphorisierungsraffination und/oder eine Entkohlungsraffination des geschmolzenen Roheisens (6) durchgeführt wird bzw. werden,
und das zwischen dem einen Raffinationsschritt und dem anderen Raffinationsschritt einen Zwischenschritt zur Schlackenentfernung durchführt, bei dem die in dem einen Raffinationsschritt erzeugte Schlacke durch einen Schacht (14) entfernt wird,
**dadurch gekennzeichnet, dass**
in dem Zwischenschritt zur Schlackenentfernung ein oder zwei oder mehrere Werte, ausgewählt aus einer Schlackenentfernungsstromform, einer Schlackenentfernungsstromgeschwindigkeit und einer Schlackenoberflächenform, gemessen wird bzw. werden, um entweder eine Menge und/oder physikalische Eigenschaften der entfernten Schlacke zu schätzen; eine Menge an Schlacke, die in dem Raffinationsofen vom Konvertertyp (2) verbleibt, geschätzt wird, oder die Menge und Zusammensetzung der Schlacke, die in dem Raffinationsofen vom Konvertertyp (2) verbleibt, geschätzt werden; und basierend auf dem Schätzungsergebnis eine Menge an Hilfsrohstoff, der einer der Raffinationsarten in dem anderen Raffinationsschritt zuzuführen ist, bestimmt wird, wobei
das Verfahren Schlacke entfernt, nachdem ein Einfluss der kinetischen Viskosität, v, der Schlacke auf eine Beziehung zwischen einer horizontalen Entfernung, L, die ein Schlackenentfernungsstrom (13) an einer bestimmten Entfernung, H, von dem Schacht (14) nach unten erreicht, und einer schachtbasierten Schlacken-oberflächenhöhe, $h_0$, innerhalb des Raffinationsofens vom Konvertertyp (2) oder auf eine Beziehung zwischen der schachtbasierten Schlackenoberflächenhöhe, $h_0$, innerhalb des Raffinationsofens vom Konvertertyp (2) und einer Schlackendicke, $h_e$, an einer Schachtposition durch eine im Vorfeld erstellte Näherungskurve approximiert wurde, und die kinetische Viskosität, v, der Schlacke anhand eines Ergebnisses des Messens der Schlackenentfernungsstromform und der Schlackenoberflächenform beim Entfernen der Schlacke schätzt,
wobei die Näherungskurve durch den folgenden mathematischen Ausdruck approximiert wird:

$$L = \alpha\sqrt{(h_0 - \beta)} \qquad (4)$$,

wobei L die horizontale Entfernung ist, die der Schlackenentfernungsstrom an der Schlackenentfernungsstromfallstrecke H erreicht, $\alpha$ und $\beta$ Konstanten sind, die von der kinetischen Viskosität, $\nu$, der Schlacke abhängen; und $h_0$ die schachtbasierte Schlackenoberflächenhöhe ist.

2. Verfahren zum Betreiben eines Konverters nach Anspruch 1, wobei
das Verfahren, um den Schlackenentfernungsstromform, die Schlackenentfernungsstromgeschwindigkeit und die Schlackenoberflächenform zu messen, einen oder mehrere der folgenden Werte misst: die horizontale Entfernung, L, die der Schlackenentfernungsstrom (13) an einer bestimmten Entfernung, H, vom Schacht (14) nach unten erreicht, die schachtbasierte Schlackenoberflächenhöhe, $h_0$, innerhalb des Raffinationsofens vom Konvertertyp (2), eine Schlackenoberflächenstromgeschwindigkeit, $v_e$, an der Schachtposition und die Schlackendicke, $h_e$, an der Schachtposition.

3. Verfahren zum Betreiben eines Konverters nach Anspruch 1 oder 2, wobei
das Verfahren eine massenbasierte Schlackenentfernungsmenge W(t) von der horizontalen Entfernung, L, die ein Schlackenentfernungsstrom an der bestimmten Entfernung, H, vom Schacht (14) nach unten erreicht, und die Schlackendicke, $h_e$, an einer Schachtposition unter Verwendung der relationalen Ausdrücke der folgenden mathematischen Ausdrücke 1 bis 3 schätzt:
[Ausdruck 1]

$$W = \int_0^t \Delta W / \Delta t \cdot dt \qquad (1)$$

[Ausdruck 2]

$$\Delta W / \Delta t = \int_0^h \rho w(h) v(h) \cdot dh + b = a w_e v_e h_e + b \qquad (2)$$

[Ausdruck 3]

$$v_e = L \times \sqrt{\frac{g}{2H}} \qquad (3)$$

wobei W eine massenbasierte Schlackenentfernungsmenge ist; t eine Schlackenentfernungszeit ist; $\Delta W / \Delta t$ eine massenbasierte Schlackenentfernungsgeschwindigkeit ist; w eine Schlackenentfernungsstrombreite an einer Höhe h ist; $w_e$ eine Schlackenentfernungsstromoberflächenbreite an der Schachtposition ist; $\rho$ eine Schlackendichte ist; v eine Schlackenstromgeschwindigkeit an der Höhe h ist; $v_e$ eine Schlackenoberflächenstromgeschwindigkeit an der Schachtposition ist; $h_e$ die Schlackendicke an der Schachtposition ist; a und b Konstanten sind; H die Schlackenentfernungsstromfallstrecke ist; L die von dem Schlackenentfernungsstrom an der Schlackenentfernungsstromfallstrecke H erreichte horizontale Entfernung ist und g die Erdbeschleunigung gleich 9,8 m/s$^2$ ist.

4. Verfahren zum Herstellen von geschmolzenem Stahl,
**dadurch gekennzeichnet, dass**
das Verfahren unter Verwendung des Verfahrens zum Betreiben eines Konverters nach einem der Ansprüche 1 bis 3 geschmolzenem Roheisen innerhalb eines Raffinationsofens vom Konvertertyp eine Sauerstoffquelle zuführt, eine Entsilikonisierungsraffination von geschmolzenem Roheisen, eine Entphosphorisierungsraffination und eine Entkohlungsraffination von geschmolzenem Roheisen durchführt und einen Schlackenentfernungsvorgang oder einen Schlackenentfernungszwischenvorgang durchführt.

## Revendications

1. Procédé de fonctionnement d'un convertisseur, consistant à alimenter une source d'oxygène gazeux dans de la fonte brute en fusion (6) contenue dans un four de raffinage de type convertisseur (2) au moyen d'une lance de soufflage par le haut (3) et, éventuellement, à insuffler un gaz oxydant ou un gaz inerte par une tuyère de soufflage par le bas (5) afin d'effectuer un raffinage de désiliciation de la fonte brute en fusion (6) un raffinage de déphosphoration et un raffinage de décarburation de la fonte brute en fusion, comprenant la sélection de l'une des combinaisons d'étapes de raffinage suivantes :

une combinaison d'une étape de raffinage consistant à effectuer une partie du raffinage de désiliciation de la fonte brute en fusion (6), et une autre étape de raffinage consistant à effectuer un raffinage de déphosphoration de la fonte brute en fusion (6) après le raffinage de désiliciation, seul ou en combinaison avec un raffinage de décarburation ; et

une autre combinaison d'une étape de raffinage consistant à effectuer l'un ou les deux des raffinages de désiliciation et de déphosphoration de la fonte brute en fusion (6), et d'une étape de raffinage consistant à effectuer l'un ou les deux des raffinages de déphosphoration et de décarburation de la fonte brute en fusion (6), et effectue, entre l'une des étapes de raffinage et l'autre étape de raffinage, une étape intermédiaire d'évacuation du laitier consistant à éliminer le laitier généré lors de l'une des étapes de raffinage, par une gorge (14),

**caractérisé par**,

lors de l'étape intermédiaire d'évacuation du laitier, mesurer un ou deux ou plusieurs paramètres sélectionnés parmi la forme du flux d'évacuation du laitier, la vitesse du flux d'évacuation du laitier et la forme de la surface du laitier afin d'estimer l'une ou les deux de la quantité et des propriétés physiques du laitier évacué ; estimer une quantité de laitier restant à l'intérieur du four de raffinage de type convertisseur (2), ou la quantité et la composition du laitier restant à l'intérieur du four de raffinage de type convertisseur (2) ; et déterminer, sur la base du résultat de l'estimation, une quantité de matière première auxiliaire à introduire dans l'un des types de raffinage réalisés lors de l'autre étape de raffinage, dans lequel

le procédé consiste à évacuer le laitier après avoir estimé l'influence de la viscosité cinématique, v, du laitier sur la relation entre une distance horizontale, L, atteinte par un flux d'évacuation du laitier (13) à une certaine distance, H, en aval de la gorge (14) et une hauteur de surface de laitier, $h_0$ basée sur la gorge, à l'intérieur du four (2) de raffinage de type convertisseur, ou sur la relation entre la hauteur de surface de laitier, $h_0$, à l'intérieur du four (2) de raffinage de type convertisseur, et une épaisseur de laitier, $h_e$, au niveau de la gorge, à l'aide d'une courbe d'approximation préalablement établie, et à estimer la viscosité cinématique, v, du laitier à partir d'un résultat de mesure de la forme d'écoulement du laitier et de la forme de surface du laitier lors de son évacuation, dans lequel la courbe d'approximation est définie par l'expression mathématique suivante :

$$L = \alpha\sqrt{(h_0 - \beta)} \qquad (4)$$,

où L représente la distance horizontale atteinte par l'écoulement du laitier à la distance de chute H de l'écoulement du laitier ; $\alpha$ et $\beta$ sont des constantes dépendant de la viscosité cinématique v du laitier ; et $h_0$ représente la hauteur de surface de laitier, définie par rapport à la gorge.

2. Procédé de fonctionnement d'un convertisseur selon la revendication 1, dans lequel,
afin de mesurer la forme de l'écoulement du laitier, la vitesse d'écoulement du laitier et la forme de la surface du laitier, le procédé consiste à mesurer un ou plusieurs des paramètres suivants : la distance horizontale L atteinte par l'écoulement du laitier (13) à une certaine distance, H, en aval de la gorge (14), la hauteur de surface de laitier, $h_0$, définie par rapport à la gorge, à l'intérieur du four de raffinage de type convertisseur (2), une vitesse d'écoulement de surface du laitier, $v_e$, au niveau de la gorge, et l'épaisseur de laitier, $h_e$, au niveau de la gorge.

3. Procédé de fonctionnement d'un convertisseur selon la revendication 1 ou 2, dans lequel
Le procédé estime une quantité évacuée de laitier, W(t), basée sur la masse, à partir de la distance horizontale L atteinte par un écoulement de laitier à une certaine distance H en aval de la gorge (14) et de l'épaisseur de laitier, $h_e$, au niveau de la gorge, à l'aide des relations définies par les expressions mathématiques 1 à 3 suivantes :
[Expression 1]

$$W = \int_0^t \Delta W/\Delta t \cdot dt \qquad (1)$$

[Expression 2]

$$\Delta W / \Delta t = \int_0^h \rho w(h) v(h) \cdot dh + b = a w_e v_e h_e + b \quad (2)$$

[Expression 3]

$$v_e = L \times \sqrt{\frac{g}{2H}} \quad (3)$$

où W représente une quantité évacuée de laitier basée sur la masse ; t représente un temps d'évacuation du laitier ; $\Delta W / \Delta t$ représente une vitesse d'évacuation du laitier basée sur la masse ; w représente une largeur d'écoulement du laitier à une hauteur h ; $w_e$ représente une largeur de surface de l'écoulement du laitier au niveau de la gorge ; $\rho$ représente la densité du laitier ; v représente une vitesse d'écoulement du laitier à la hauteur h ; $v_e$ représente une vitesse d'écoulement de surface du laitier au niveau de la gorge ; $h_e$ représente l'épaisseur du laitier au niveau de la gorge ; a et b sont des constantes ; H représente une distance de chute de l'écoulement du laitier ; L représente une distance horizontale atteinte par l'écoulement du laitier à la distance de chute H ; et g représente l'accélération gravitationnelle, égale à 9,8 m/s$^2$.

4. Procédé de production d'acier en fusion
   **caractérisé en ce que**,
   en utilisant le procédé de fonctionnement d'un convertisseur selon l'une quelconque des revendications 1 à 3, le procédé consiste à alimenter une source d'oxygène dans la fonte brute en fusion à l'intérieur d'un four de raffinage de type convertisseur, à effectuer un raffinage de désiliciation de la fonte brute en fusion, un raffinage de déphosphoration et un raffinage de décarburation de la fonte brute en fusion, et à effectuer un traitement d'évacuation du laitier ou un traitement intermédiaire d'évacuation du laitier.

FIG. 1

CONTROL COMPUTER

FIG. 2

FIG. 3

FIG. 4

FIG. 5

FIG. 6

FIG. 7

FIG. 8

FIG. 9

FIG. 10

**REFERENCES CITED IN THE DESCRIPTION**

**Patent documents cited in the description**

- US 2015000470 A1
- JP 2017193784 A
- TW I685569 B

- JP H10152714 A
- JP 2011137196 A
- JP 2010126790 A

**Non-patent literature cited in the description**

- Slag Atlas. Verlag Stahleisen GmbH, 1995